(19) Europäisches Patentamt / European Patent Office / Office européen des brevets

(11) **EP 3 465 229 B1**

(12) **EUROPEAN PATENT SPECIFICATION**

(45) Date of publication and mention of the grant of the patent:
**02.04.2025 Bulletin 2025/14**

(21) Application number: **17727345.5**

(22) Date of filing: **26.05.2017**

(51) International Patent Classification (IPC):
*G01P 15/093* *(2006.01)*

(52) Cooperative Patent Classification (CPC):
**G01P 15/093**

(86) International application number:
**PCT/GB2017/051513**

(87) International publication number:
**WO 2017/203284 (30.11.2017 Gazette 2017/48)**

(54) **A MOBILE OBJECT COMPRISING AN OPTICAL ACCELEROMETER ARRANGEMENT AND A CAMERA TO DETERMINE A POSITION OF THE MOBILE OBJECT**

EIN MOBILES OBJEKT MIT EINER OPTISCHEN BESCHLEUNIGUNGSSENSOR-ANORDNUNG UND EINER KAMERA ZUR BESTIMMUNG EINER POSITION DES MOBILEN OBJEKTS

UN OBJET MOBILE COMPRENANT UN ARRANGEMENT D'ACCÉLÉROMÈTRE OPTIQUE ET UNE CAMÉRA POUR DÉTERMINER LA POSITION DE L'OBJET MOBILE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **27.05.2016 GB 201609427**

(43) Date of publication of application:
**10.04.2019 Bulletin 2019/15**

(73) Proprietor: **Sintef TTO AS**
**7465 Trondheim (NO)**

(72) Inventors:
• **DAHL, Tobias Gulden**
**0880 Oslo (NO)**
• **BJERKENG, Magnus Christian**
**0272 Oslo (NO)**
• **VOGL, Andreas**
**1065 Oslo (NO)**

(74) Representative: **Dehns**
**10 Old Bailey**
**London EC4M 7NG (GB)**

(56) References cited:
| | |
|---|---|
| EP-A1- 0 691 542 | WO-A1-2014/058472 |
| WO-A1-2015/128431 | CN-A- 105 182 000 |
| DE-B3- 102014 102 727 | DE-B3- 102014 102 727 |
| US-A1- 2002 180 978 | US-A1- 2002 180 978 |
| US-A1- 2002 180 978 | US-A1- 2010 145 620 |
| US-A1- 2010 145 620 | US-A1- 2010 145 620 |

## Description

Accelerometers have a wide variety of uses in sensing motion from smartphones to aircraft and ships. Typical accelerometers measure acceleration through the movement of a known measurement mass. The displacement of the mass might, for example, be measured by a strain gauge.

One of the shortcomings of conventional accelerometers is that the signals they produce are prone to a significant amount of noise. This can limit their accuracy and so usefulness.

More recently it has been proposed to use optical accelerometers to measure acceleration. In these the movement of a measurement mass is determined by the deflection of a light beam such as a laser. US 2010/145620 A1 discloses a well logging instrument that uses a plurality of accelerometers to measure gravitational acceleration down a borehole. DE 102014102727 B3 discloses a method and a position sensor for continuously determining a position of the position sensor along a trajectory in a space, wherein first a first position is used as a reference position and a position deviation from the reference position and thus the position is determined by an inertial sensor and an integrator; wherein in addition a camera is rigidly connected to the inertial sensor, with which three-dimensional first image data of a spatial profile are generated from the first position. US 2002/180978 A1 discloses an accelerometer for determining the acceleration of a structure including a mass within a housing rotationally supported by a hinge and opposing support members. The support members are alternately wound around a fixed mandrel and the mass in a pendulum arrangement. At least a portion of one of the support members comprises a transducer capable measuring the rotation of the mass within the housings.

The Applicant has now appreciated that the certain characteristics of optical accelerometers can be exploited to open up further advantageous ways in which they can be used.

When viewed from a first aspect the invention provides a mobile object as claimed in claim 1.

Thus it will be seen by those skilled in the art that in accordance with the invention a plurality of optical accelerometers is provided in an array so that the individual accelerometers are sensitive along a common axis. The Applicant has appreciated that this provides additional data which can be successfully combined, as is described further herein, to give greater accuracy because of the inherently low self-noise of optical accelerometers.

In a set of embodiments the accelerometers comprise a light source arranged to provide a light beam which is reflected by a reflective surface moved by the measurement mass to detect the displacement thereof. The reflective surface could be on the measurement mass itself. Alternatively it could be provided by a membrane or other member to which the measurement mass is attached. The light source could be common to a plurality of accelerometers but in a set of embodiments a separate light source is provided for each accelerometer.

In a set of such embodiments each of the accelerometers comprises a diffraction grating through which part of said light beam passes before being reflected from the reflective surface. The reflected light interferes with light reflected from the diffraction grating to produces an interference pattern, changes in which can give a more accurate indication of movement of the reflective surface and thus the measurement mass.

The optical accelerometers could be fabricated using any desired technique but in a set of embodiments they are fabricated using Micro-Electrical Mechanical System (MEMS) techniques.

The dimensions of the array may be selected according to the particular application, although in an exemplary set of embodiments the array has a maximum linear dimension of between 5 and 50 mm.

In a set of embodiments, the array has a maximum linear dimension of 100mm.

In a set of embodiments the optical accelerometers have a minimum spacing of between 1 and 10 mm.

In a set of embodiments the array comprises between 2 and 20 optical accelerometers.

The Applicant has appreciated that optical accelerometers have a low inherent or 'self' noise and moreover that they can be fabricated so as to have a small area.

Crucially there is no strong negative correlation between size and inherent noise. By contrast in other types of accelerometers the sensitivity of the accelerometer is dependent on the size of the membrane. This means that as conventional accelerometers get smaller, there is a reduction in the signal to noise ratio.

The Applicant's insight is that the low self-noise characteristics and small size of optical accelerometers can be exploited by providing the optical accelerometers in a closely spaced array. In particular it has been appreciated that where the self-noise floor is sufficiently low (as can be achieved with optical accelerometers), more accurate measurements can be made without having an adverse impact on the overall size of the arrangement.

Having the array closely spaced provides further advantages in terms of overall physical size. This means for example that the advanced performance which can be achieved from an array can be implemented in a wide range of devices.

The array could be any shape but in a set of embodiments it conforms to a shape selected from the set comprising a line, plane, sphere, tetrahedron, cube, cuboid. octahedron, dodecahedron and icosahedron.

In accordance with the invention a plurality of optical accelerometers with a common axis of sensitivity is provided in an array. The overall array could therefore have a single axis of sensitivity. Equally however the array could have accelerometers, preferably optical, with additional axes of sensitivity. There could, for example, be one or two additional axes of sensitivity. In a set of embodiments the array comprises a plurality of optical accelerometers having sensitivity in each of three orthogonal axes. This could be achieved with a number of single-axis accelerometers suitably oriented such that there are a plurality oriented in each of the three directions. Alternatively a plurality of tri-axis accelerometers (known *per* se in the art) could be employed.

Embodiments of the invention can be used to determine movement of the object. The common structure to which the array of optical accelerometers is attached could form part of a self-contained module which is, in turn, attached to the object. Alternatively the object itself could provide the common structure. For example a plurality of optical accelerometers could be attached to (including being integrated into) an object such as a virtual reality headset or drone. Where the array comprises accelerometers having three orthogonal axes, movement in three dimensions can be determined. The optical accelerometer arrangement in accordance with the invention may be attached to an object also comprising a gyroscope. As is known in the art, gyroscopes are able to determine angular movement and are often used as part of movement detection systems in vehicles, especially air-borne and water-borne vehicles. In such applications an accelerometer may also be provided to enhance the movement detection capabilities. However the Applicant has appreciated that the accelerometer is often the 'weak link' which acts as the limiting factor in the overall accuracy which can be achieved. As an example, there are many applications where the accelerometer is simply used to estimate the direction of the gravitational force when the unit is at rest. In accordance with the invention by contrast, the improved accuracy provided by the array of optical accelerometers can removes this restriction so that the (typically superior) accuracy of gyroscope can be realised.

However the Applicant has also realised that the array in accordance with the invention can give further synergies in applications which employ a gyroscope. More specifically the Applicant has realised that fixed spatial relationship of accelerometers having the same axis of sensitivity allows information about rotation to be determined using the difference in the outputs of the spatially-separated accelerometers. Such embodiments lend themselves better to implementations like those discussed where the object itself provides the common structure as this enables spatial separation to be maximised within the constraints of the size and shape of the object. The low self-noise of the optical accelerometers however means that useful rotation data can be obtained even though the separation **between the** respective accelerometers is smaller; e.g. smaller than would typically otherwise be necessary to obtain useable rotation information.

The rotation information derived from the array of optical accelerometers may thus be used to enhance the accuracy of the rotation determination compared to using the gyroscope alone. There are a number of ways in which this could be achieved. For example the signals could simply be averaged, or a weighted average applied.

As well as providing information on angular velocity, the optical accelerometer arrangement can, in a set of embodiments, be used to provide information on angular acceleration. Although angular acceleration information is theoretically available from spaced accelerometers, it is assumed in the art to suffer too much from noise in the signal to be of practical use. The Applicant has now appreciated however that through the array of low-noise optical accelerometers provided in accordance with the invention, such information can be usefully derived.

The Applicant has recognised that whilst cameras, particularly stereoscopic or three-dimensional (3D) cameras, can effectively determine position of an object given suitable resolution, processing power etc., such an approach can use a significant amount of power which makes it ill-suited to portable or mobile applications. The Applicant is aware that here are currently significant attempts to try to make such a 3D-camera (only) approach for VR head tracking work and to bring it to market, but that this not yet been successful.

A further shortcoming with some other, existing 3D camera-based tracking systems - for example the HTC Valve ™ virtual reality headset - is their reliance on fixed beacons placed in the room in which the device is used. By contrast the Applicant has appreciated that the use of one or more optical accelerometers in conjunction with a camera configured to determine location can obviate some or all of these shortcomings.

The camera is preferably a stereoscopic or 3D camera.

The location estimate can be obtained from the optical accelerometer output(s) and the camera output in a number of ways. The camera is used to establish a series of absolute positions - i.e. positions relative to other objects or features in its environment - and the optical accelerometer output(s) is/are used to establish positions of said mobile object relative to said absolute positions. The Applicant has appreciated that it becomes feasible to employ a camera, preferably a 3D camera, for absolute tracking without requiring beacons or any other dedicated infrastructure, since it does not need to be employed all the time; the optical accelerometer can give a accurate information on position inbetween. This allows the increased processing required for such absolute positioning through simply imaging the mobile object's environment but without unacceptably increasing power consumption. The camera could be used to establish absolute position periodically - i.e. at regular intervals. Alternatively it could be used to establish absolute position adaptively - e.g. if the optical accelerometer indicates relative movement of the mobile object has exceeded a threshold.

The optical accelerometer arrangement is provided in or on the mobile object. A wide variety of mobile objects could be suitable for this. Some non-limiting examples include: remotely operated or autonomous airborne vehicles (drones), autonomous underwater vehicles, robots, driverless cars, virtual or augmented reality headsets, computer input peripherals such as mice, pens styluses etc.

Where reference to made herein to an item being attached to another item this should be understood to mean simply that they are held so as to move together. No specific degree or manner of fixing is implied and thus this covers items that are integrally formed, permanently fixed, removably attached etc. The attachment could be direct in the sense that the items are in physical contact, or indirect in the sense that one or more intermediate items or layers is present.

Where reference to made herein to a substrate this should be understood to mean simply a base structure to which items are attached (in the sense set out above) without implying any particular structure. Thus while a printed circuit board or MEMS base layer could represent a substrate neither of these is to be necessarily implied.

Certain embodiments of the invention will now be described, by way of example only, with reference to the accompanying drawings in which:

Fig. 1 is a schematic diagram of an optical accelerometer in accordance with the invention;

Fig. 2 is a schematic diagram of a module comprising a cuboid array of optical accelerometers in accordance with the invention;

Figs. 3a and 3b show schematically alternative array geometries;

Fig. 4 is a system diagram of the module of Fig. 2;

Figs. 5a-d show schematically various mobile objects to which the array of Fig. 2 can be applied;

Figs. 6a and 6b show a comparison of map-matching for SLAM systems using optical accelerometers for inertial measurement and SLAM systems using accelerometers according to the prior art.

Fig. 7 is an illustrative diagram showing how a camera can be used for position tracking;

Figs. 8a and 8b are comparative illustrations of a prior art VR headset arrangement and an embodiment of the invention;

Fig. 9 is a flowchart describing operation of a position tracking system in accordance with the invention;

Fig. 10 is gives comparative plots of sensor volume against signal-to-noise ratio for known accelerometers and those in accordance with the invention;

Fig. 11 shows comparison of the expected error in estimated position between an optical accelerometer array with a gyroscope, and a conventional MEMS accelerometer with a gyroscope.

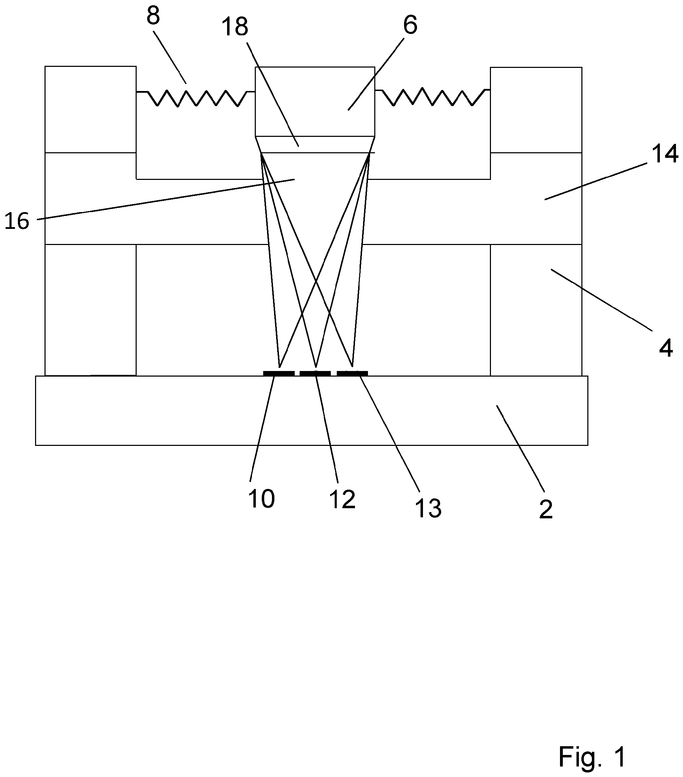

Fig. 1 shows schematically the main functional parts of an exemplary optical accelerometer manufactured using standard micro-electromechanical systems (MEMS) technology. It comprises a substrate 2 on which is mounted an upstanding housing 4. The housing 4 could be of any appropriate mechanical material e.g. silicon. No electrical connections are necessary in the housing.

The housing 4 is open at the upper end thereof and a measurement mass 6 is suspended across the open end by a number of springs 8 which are connected to the walls of the housing 4 near the upper end. Instead of using springs, the measurement mass 6 could be suspended by membrane, cantilevers, folded cantilevers or the like.

Inside the housing, mounted on the substrate 2, are a light source in the form of a laser, e.g. a vertical cavity surface-emitting laser (VCSEL) 10, and photo-detectors 12, 13. The substrate 2 also carries read-out and signal processing electronics.

A transparent substrate 14 spans the housing 4 between the laser diode 10 and the measurement mass 6. On a raised central portion 16 of the transparent substrate is a diffractive element 18. This could, for example, be implemented by reflective metal strips deposited in a diffractive pattern on top of the transparent substrate.

In use, as an accelerating force is applied to the whole structure, the measurement mass 6 will be made to move against the restoring force of the springs 8 and so the distance between it and the diffractive element 18 changes.

The light from the laser 10 passes through the transparent substrate 14. Some of the light passes through the pattern of the diffractive element 18 and some is reflected by the lines making up the pattern. The light passing through reflects from the rear surface of the measurement mass 6 and back through the diffractive element 18. The relative phase of the light that has travelled these two paths determines the fraction of light which is directed into the different diffraction orders of the diffractive element (each diffraction order being directed in fixed direction). In presently preferred embodiments the diffractive element 18 is in the form of a diffractive Fresnel lens. Thus the lines of the diffractive pattern 18 are sized and spaced according to the standard Fresnel formula which gives a central focal area corresponding to the zeroth order. The first photo-detector 12 is positioned to receive the light in the zeroth order. The second photo-detector 13 is positioned to receive light from the focused first diffraction order of the diffractive Fresnel lens. When the spacing between the diffractive element 16 and the measurement mass 6 is half of the wavelength of the laser light from the diode 10 or an integer multiple thereof, virtually all light reflected by the diffractive element 16 is directed into the zeroth diffraction order. At this position the second detector 13 receives very little light as it is located at the position of the diffractive element's first order (which is focussed into a point for a diffractive Fresnel lens).

As will be appreciated, the optical path length is of course dependent on the distance between the diffractive element 16 and the measurement mass 6. The intensity of light recorded by the first photo-detector 12 measuring the zeroth diffraction order and the second photo-detector 13 (whose positions are fixed), varies as the above-mentioned spacing varies but in an out-of-phase manner. Fig. 1 shows only a single optical accelerometer but a plurality could be provided on the same substrate.

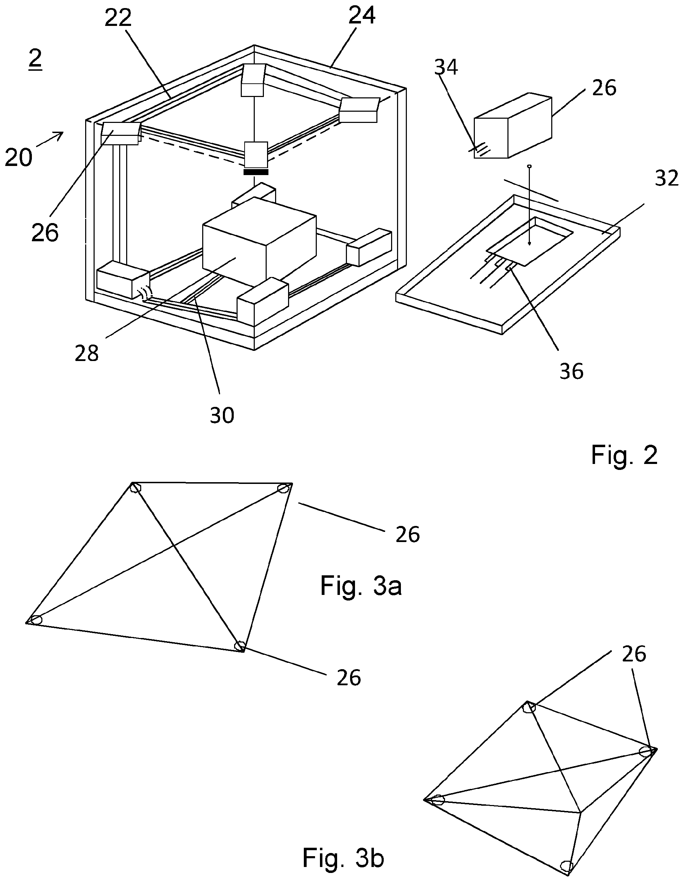

Fig. 2 shows an optical accelerometer arrangement or module 20 embodying the invention. The arrangement 20 comprises a frame 22 to which an outer housing 24 (shown transparent for illustrative purposes) is attached. A number of optical accelerometers 26 are attached to the frame 22 at the respective corners thereof. The frame 22 is approximately cubic but, as illustrated in Fig. 3a and 3b, other shapes such as a tetrahedron, octahedron etc could be used, with the optical accelerometers 26 located at the vertices thereof. Another example would be to have a square e.g. with length 10cm, with accelerometers located at the corners thereof. This would give a long baseline measurement and thus high accuracy.

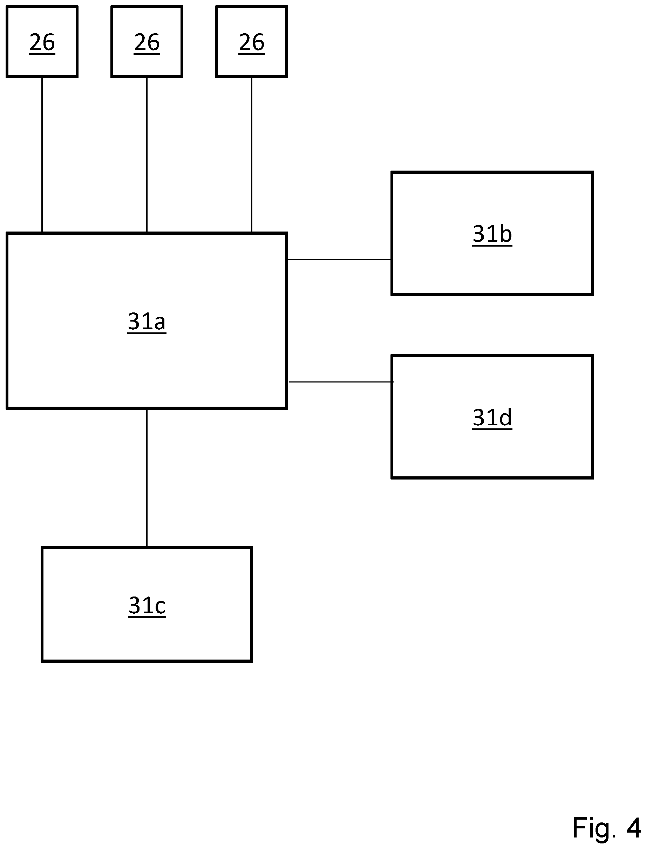

The optical accelerometers 26 could be single axis optical accelerometers as described above with reference to Fig. 1. Alternatively they could be three-axis optical accelerometers which comprise three of the arrangements shown in Fig. 1 disposed at mutually orthogonal angles. The frame 22 also provides electrical connections to the optical accelerometers 26 and to a control unit 28 via a further connection 30. As illustrated in Fig. 4, the control unit 28 includes a processor 31a, memory 31b, power supply 31c and communications module 31d.

As shown in the enlarged section of Fig. 2, the individual optical accelerometers 26 are received (e.g. glued) in suitable recesses in a plate 32. Electrical pins 34 on the optical accelerometer unit 26 engage in corresponding sockets 36 in the plate 32.

It will be appreciated that the overall module 20 therefore provides an array of eight spatially-separated optical accelerometers with sensitivity in any given direction (either a single direction if uni-direction optical accelerometers are used or in each of three directions if tri-directional optical accelerometers are used). As will be demonstrated below, such an array of optical accelerometers allows more accurate positioning to be achieved and also allows angular velocity and acceleration to be reliably estimated.

Although the embodiment depicted shows the optical accelerometers 26 as independent units, it is also envisaged that in other embodiments two or more of the optical accelerometers could share a laser to save power. The laser light could be distributed form a central source for example using optical fibres.

In the simplest implementation, the signals from the optical accelerometers 26 can be combined by the processor in the control unit 28 by averaging them to produce a more accurate estimate of linear acceleration in the direction of interest (which could be one or more as discussed previously). The greater accuracy comes from the simple relationship for averaging N optical accelerometer outputs. A single optical accelerometer element has a variance, V

$$V = \sigma_j^2 \qquad \text{(Eq. 1)}$$

The variance indicates how noisy the optical accelerometer is. If N optical accelerometer outputs are average, then the variance $V_{avg}$ of the average is:

$$V_{avg} = \frac{\sigma_j^2}{N}, \qquad \text{(Eq. 2)}$$

which is of course smaller than V.

In practice the number of optical accelerometer elements of a given size which can be fitted into a given volume is proportional to the volume but inversely proportional to the size of each element. Thus the variance of the measurement from an array of optical accelerometer sensor elements is proportional to the size of the individual sensor elements.

As mentioned above, as well as using the optical accelerometers 26 to give a more accurate measurement of linear acceleration, the provision of spatially-separated optical accelerometers having a common axis of sensitivity can be exploited to determine angular velocity and acceleration. This may be achieved using iterative regression, which is one of several strategies for solving this problem.

The following rigid body kinematic equation applies:

$$\mathbf{f}_{ib_n}^{b_n} = R_v^n \mathbf{f}_{ib}^{b_v} + R_v^n \left( \boldsymbol{\alpha}_{ib}^{b_v} \times \mathbf{r}_{nv}^{b_v} \right) + R_v^n \left( \boldsymbol{\omega}_{ib_v}^{b_v} \times \left( \boldsymbol{\omega}_{ib_v}^{b_v} \times \mathbf{r}_{nv}^{b_v} \right) \right)$$

(Eq. 3)

Where:

$f_{ibn}$ is the acceleration of a 3-axis optical element;
$f_{ib}$ is the acceleration of a common point relative to $a_i$;
the R terms denote a change of orientation;
$\alpha$ is the angular acceleration
$r$ is the vector distance between $f_{ibn}$ and $f_{ib}$
$\omega$ is the angular velocity

The term $f_{ibn}$ is known because it is measured directly by the optical accelerometers. The term $f_{ib}$ can be derived by averaging all the accelerometer signals around a center point and the terms r and R are constants which depend on the mounting positions of each sensor element. These can both be determined by calibration. They are known approximately since the dimensions of the mounting is known approximately. However heat warping, glue setting and other non-ideal effects result in mounting positions which do not exactly correspond to their designed positions.

The unknown variables which it is desired to calculate are $\alpha$ and $\omega$. Eq. 3 is nonlinear in $\omega$, and linear in $\alpha$. Eq. 4 gives the linearized regression form:

$$\begin{bmatrix} \partial \boldsymbol{\omega}_n \\ \partial \mathbf{f}_n \end{bmatrix} = \begin{bmatrix} R_v^n & 0 & 0 \\ -R_v^n A & R_v^n & -R_v^n [\mathbf{r} \times] \end{bmatrix} \begin{bmatrix} \partial \boldsymbol{\omega}_v \\ \partial \mathbf{f}_v \\ \partial \boldsymbol{\alpha}_v \end{bmatrix}, \quad \forall n \in \{1,\dots,N\}$$

(Eq. 4)

Where;

$$A = [\, \boldsymbol{\omega}_v \times \,] [\, \mathbf{r} \times \,] + [\, (\boldsymbol{\omega}_v \times \mathbf{r}) \times \,] \, ;$$

N is the number of optical accelerometers;
the form [ a x ] refers to the skew symmetric matrix of the vector a which has the form $a_{3x1} \times b_{3x1} = [a \, x]_{3x3} b$ [33]

This equation can solved using e.g. the Gauss Newton method. As will now be described with reference to Fig. 4a.

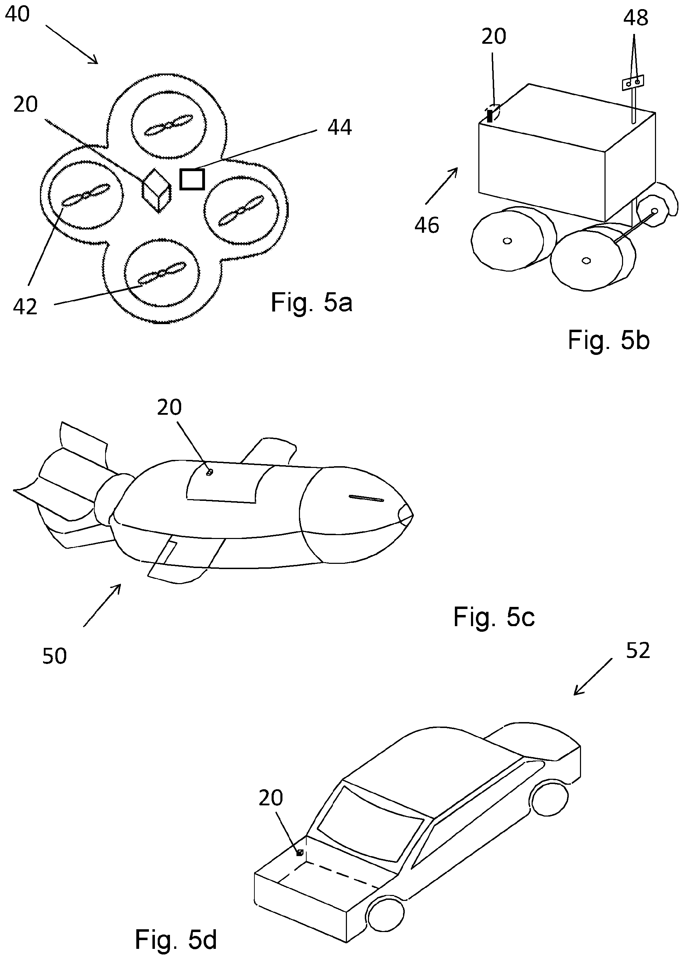

Fig. 5a shows a remotely-operated airborne vehicle or drone 40 which has four rotors 42 as is conventional. The drone also carries the optical accelerometer module 20 previously described and a conventional gyroscope 44. The optical accelerometer module 20 could have a wired connection to the on-board controller for the drone or it could communicate wirelessly, e.g. using Bluetooth ™ in order to minimise the extent to which it is necessary to re-engineer the drone 40 to incorporate this module 20.

The gyroscope 44 and optical accelerometer module 20 can work together to provide orientation and positioning information for enhancing control of the drone 40. This could, for example, be achieved by using the output from the gyroscope 44 to provide an initial value for the numeric iterative approximation algorithm referred to above, or simply by averaging the angular velocity estimates provided by the optical accelerometer module 20 and gyroscope 44 respectively.

The enhanced accuracy provided by incorporating the optical accelerometer module 20 allows the drone 40 to be navigated more successfully in indoor environments where it may not have access to Global Positioning System (GPS) signals.

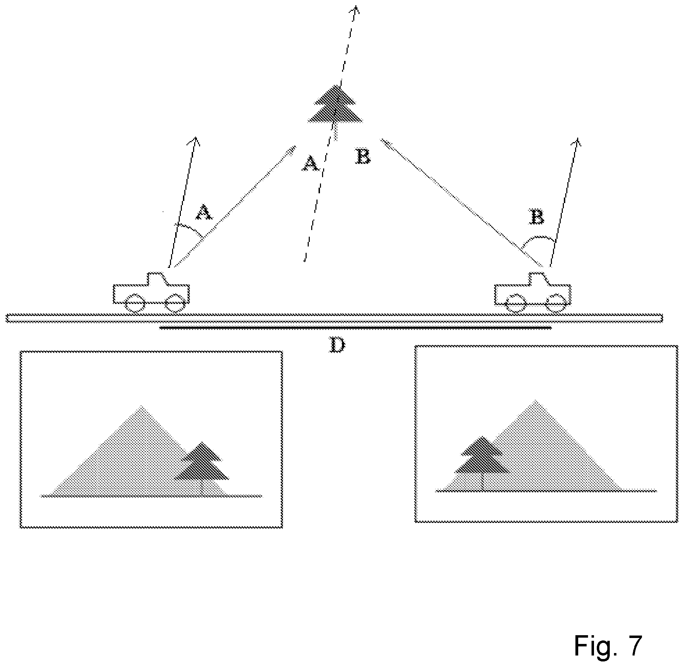

Fig. 5b shows schematically another possible embodiment of the invention. This is a ground-based autonomous robot 46 which also carries the optical accelerometer module 20. In addition to this it includes a pair of stereoscopic cameras 48 which allow it to carry out three-dimensional imaging. As will be described below with reference to Fig. 7, this gives rise to the possibility of employing an advantageous hybrid positioning approach using the optical accelerometer module 20 and the 3D camera arrangement 48.

Fig. 5c shows an underwater vehicle 50 which carries the optical accelerometer module 20. This could be configured as a remotely operated vehicle or an autonomous underwater vehicle.

Fig. 5d shows a 'driverless' car 52 which includes one or more optical accelerometer modules 20. This allows it to determine kinetic parameters and position more accurately. This may be particularly useful when the vehicle is in a tunnel or densely built-up environment where it does not have reliable reception of GPS signals.

Further details of existing methods combining inertial navigation with cameras which can be improved by the use of optical array accelerometers in accordance with the invention are given in Hesch, Joel A., et al. "Camera-IMU-based localization: Observability analysis and consistency improvement." The International Journal of Robotics Research(2013): 0278364913509675.

The Applicant considers that VSLAM (visual simultaneous localization and mapping), VINS (visual inertial navigation system) and VIO (visual inertial odometry) can all be improved by using them in conjunction with one or more optical accelerometers in accordance with the invention. The reason for this is that in all of these techniques, an improvement can be realised when there is less noise in the inertial data. Particular advantages of the present invention in the context of SLAM systems are discussed below.

In SLAM systems, the motion estimation and control logic is split into two parts: an inner loop and an outer loop. The inner loop is responsible for measuring the motion of the vehicle and is critical for stability and precise motion control. The inner loop must be executed at a very high frame rate - particularly for agile vehicles such as drones - and is therefore typically based on inertial sensors. The outer loop is responsible for constructing the map of the environment and for locating the vehicle within the map. The outer loop requires exteroceptive sensors such as cameras or LIDAR (Light Detection and Ranging) devices and thus incurs a significantly higher computational cost, and so runs at a much lower frame rate than the inner loop.

In between execution cycles of the outer loop, the vehicle is relying absolutely on the accuracy of the inertial sensors for navigation. The performance of any SLAM system is thus directly linked to the quality of the inertial measurements - as more reliable inertial measurements reduce the frequency at which the outer loop must be executed. Some of the benefits of improved inertial measurement through use of optical accelerometers in accordance with the invention are as follows:

1. Computational cost savings due to less stringent requirements on outer loop (heavy computation) update frequency. This translates to smaller, lighter, and more power efficient hardware.

2. Greater vehicular motion between outer loop execution cycles due to more precise inertial navigation. This enables the vehicle to move faster and perform more dynamic manoeuvres for the same processing speed.

3. Larger and more detailed environmental maps and more accurate localization due to less stringent requirements on outer loop execution time.

4. Greater robustness to signal drop-outs or periods with few features for exteroceptive sensors due to improved accuracy and reliability of inertial sensors. Vehicle motion can be accurately reconstructed for longer periods of time without exteroceptive sensor input.

5. Reduced filtering requirements for low-noise inertial measurements enable better velocity and acceleration control - improving the agility and performance of the vehicle control system.

6. Smoother and more accurate inertial measurements allow better prediction of the relative location of feature points, further simplifying the complexity of feature matching algorithms and improving their robustness to scenes containing self-similar features or textures.

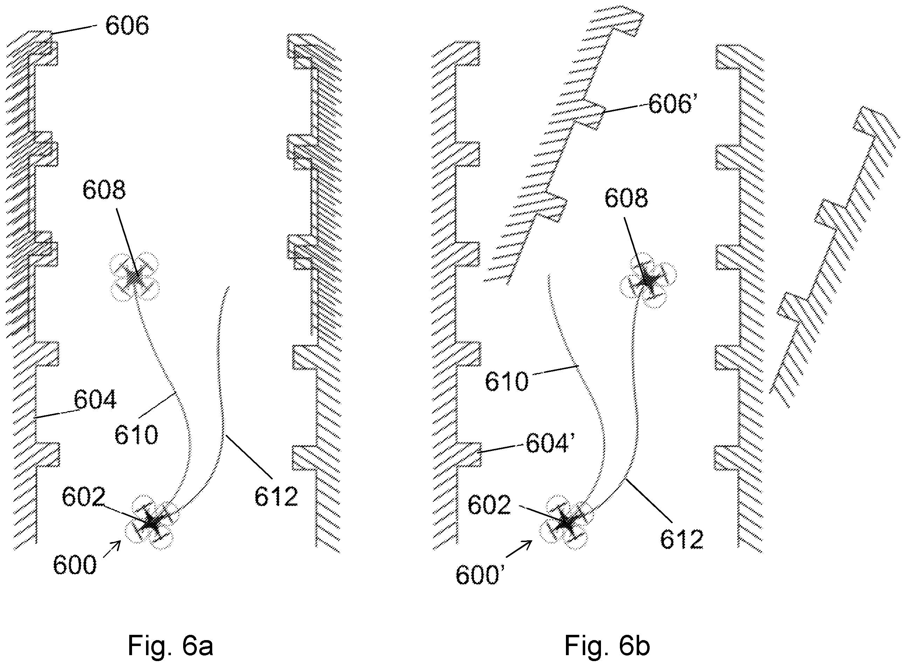

The advantage of computation costs savings from improved inertial measurement can be appreciated from Figs. 6a and 6b. Fig. 6a shows a drone 600 having an LIDIR system and an inertial measurement unit comprising an optical accelerometer module in accordance with the present invention. The LIDIR system periodically obtains a map of the drone's surroundings, but due to the high computational cost, the maps are obtained infrequently. Between acquisition of maps, the inertial measurement system is used to determine the trajectory of the drone, and thus its new position, so that the features of each acquired map can by matched up with the corresponding features on the previously acquired map.

The drone is initially at a first position 602, where the LIDIR system acquires a first map 604 of the drone's surroundings. By the time the next map 606 is acquired, the drone 600 has moved to a second position 608.

Between the first and second positions 602, 608, the inertial measurement unit calculates a path 610, which due to the accuracy of the optical accelerometer module, is a very accurate estimate of the true trajectory. Consequently, when the new map 606 is overlaid on the previous map 604, the features map onto each other closely. It is thus straightforward to match the features on the two maps.

Fig. 6b also shows a second drone 600' undergoing the same motion as illustrated for the first drone 606, and obtaining corresponding first and second maps 604', 606'. However, the second drone has an inertial measurement unit comprising a conventional MEMS accelerometer according to the prior art.

When the second drone 600' moves from the first position 602 to the second position 608, the trajectory 612 estimated by the conventional inertial measurement unit is much less accurate than the trajectory 610 calculated by the inertial measurement unit of the first drone 606 (both trajectories are shown on each of Figs. 6a and 6b for comparison). Consequently, when the second map 606' is overlaid on the first map 604', the inaccurate determination of the drone's position results in poor correlation between the map features, and consequently matching of the features is difficult or even impossible. It will be appreciated that the longer the time between map updates, the greater the deviation of the estimated trajectory from the true trajectory, and the more difficult map-matching becomes. It is thus necessary to update the map frequently if using a conventional inertial measurement unit.

However, for SLAM systems using optical accelerometers in accordance with the invention, due to the greater accurate of the trajectory determination, a lower update frequency can be used for map acquisition, saving computational resources.

A simplified example of how imaging using a 3D camera can be combined with inertial positioning using one or more optical accelerometers in accordance with the invention will be described with reference to Fig. 7. First the position of landmarks in the environment are established using a 3D camera. In the example shown in Fig. 7 the distances may be established to the tree and mountain (not shown in the upper part of Fig. 7) by capturing a first image A using the 3D camera attached to an object such as a car. When the object moves a distance D, another image B is captured. The tree and mountain have moved relative to one another between the two images A.B as a result of the parallax effect.

The inertial movement of the car is also established using acceleration and angular velocity from the optical accelerometers. Assuming that the landmarks are not moving, the movement of objects in the captured images gives further information about the car's movement . These two are averaged to improve the movement estimate.

$$p_i^{world} = \begin{bmatrix} x_i \\ y_i \\ z_i \end{bmatrix}, i = 1,2, \dots N$$

In the Kalman framework, N landmarks (xyz-positions given in the world frame) are added to the state.

The process model for each landmark is given by:

$$\dot{p}_i^{world} = 0$$

I.e. each landmark is stationary in the world frame

Fig. 7a shows schematically a known arrangement for determining movements of a virtual reality headset 54. It will be appreciated by those skilled in the art that accurate determination of movements of such headsets is critical for the user to have as natural an experience as possible. In the known arrangement, the headset 54 has a number of photodetectors which detect light pulses from stationary beacons 58 positions in the same room 60. Using relative differences in timing for receipt of light pulses from the beacons 58, the headset 54 can determine its position in the room 60 and orientation. The significant downside however is that a line of sight is required between the beacons 58 and the headset 54. This means that a user cannot move into an adjacent room 62 which has not had beacons pre-installed therein.

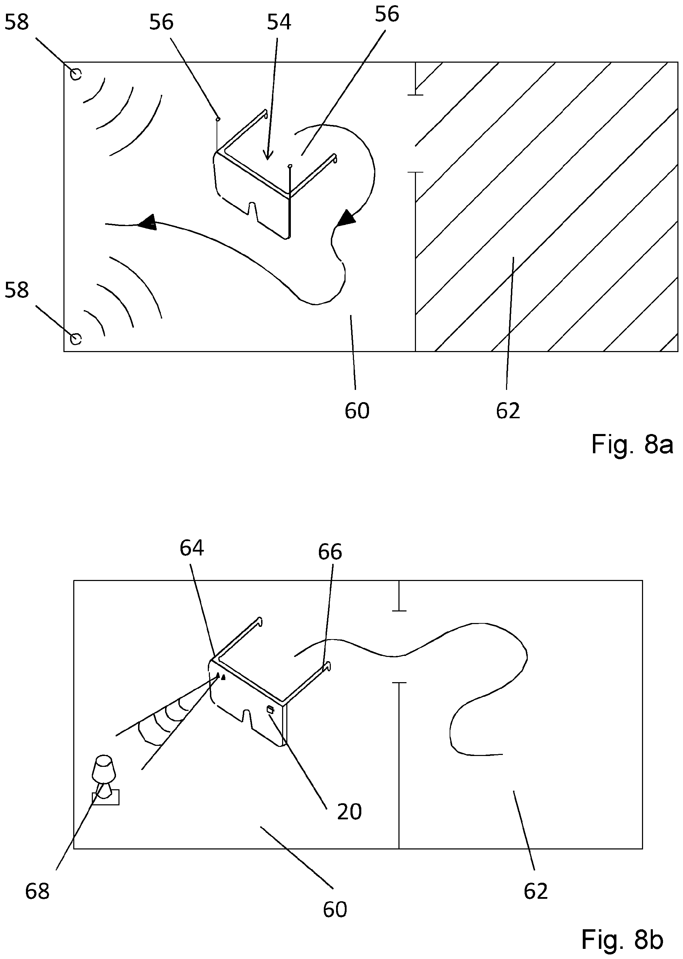

In accordance with an embodiment of the invention represented in Fig. 8b however, an optical accelerometer module 20 and 3D camera 64 are both provided on a virtual reality headset 66. As will be explained below, through a combination of 3D imaging of landmarks 68 in the environment of the headset 66 and accurate relative positioning using the optical accelerometer module 20 different to that set out above with reference to Fig. 8, the headset can be accurately tracked in as it moves between rooms 60, 62 without requiring any pre-installed beacons.

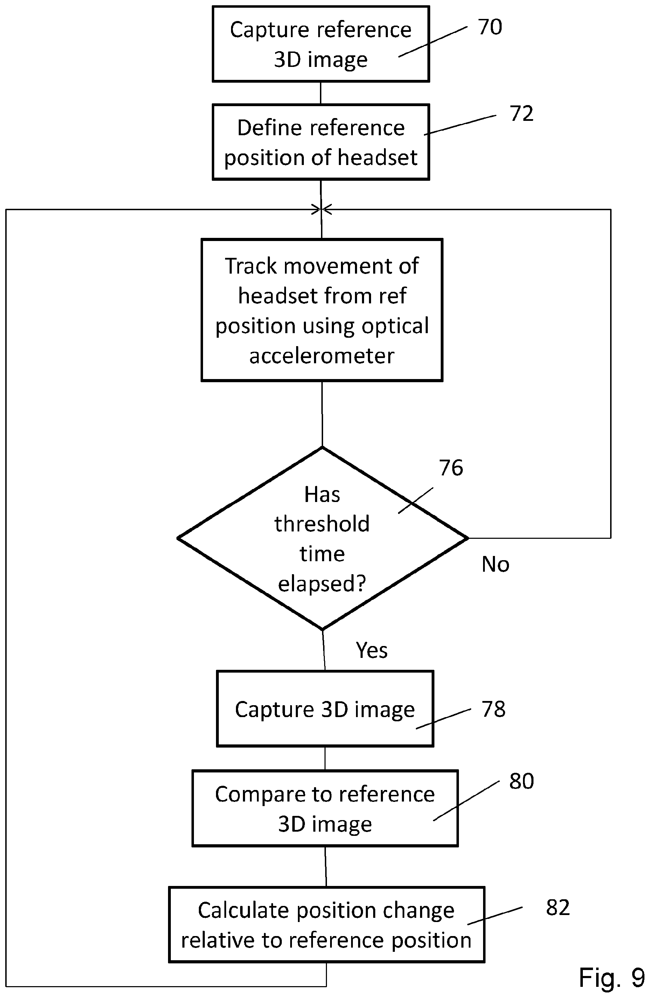

Fig. 9 is a flowchart outlining a hybrid positioning algorithm which may be employed by the headset 66. In the first step 70 the 3D camera 64 captures a reference image. Known image recognition techniques can be used to identify landmarks 68 in the image and to calculate the headset's position relative to them. This is used to establish a reference absolute position in the room 60 at step 72. Then at step 74 movement of the headset 66 is tracked using the optical accelerometer module 20. This provides acceleration information in three dimensions which can be integrated to determine aggregate movement of the headset in three dimensions relative to the reference position.

At step 76 a check is carried out to see whether a threshold time has elapsed since the image was captured. If it has not, relative tracking is continued (step 74).

However if the threshold time has elapsed, another 3D image is captured at step 76 using the camera 64. An on-board processor then compares (step 78) the newly captured image to the reference image and determines (step 80) how far the headset 66 has moved from the reference position. This is used to set a new absolute position (step 82) from which relative tracking can continue (step 74).

It may be seen that by employing this algorithm, the 3D camera 66 is only required to capture mages periodically. Thus the significant amount of power required to capture and process such images is used relatively infrequently. The optical accelerometer module 20, which has much lower power requirements, is used in between to keep an accurate model of where the headset is moving. This obviates the need for pre-installed beacons without increasing power consumption to a prohibitive level. It also allows, for example, a user to move into another room 62 without losing positioning information.

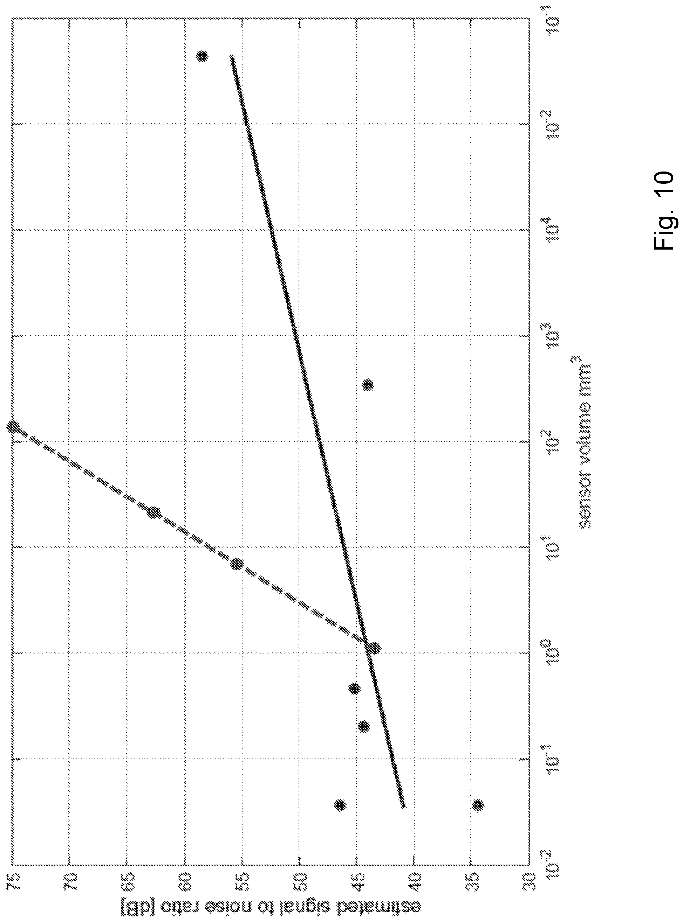

Fig. 10 is gives comparative plots of sensor volume against signal-to-noise ratio for known accelerometers 84 and those in accordance with the invention 86. From this it can be seen that for known sensors 84 there is an approximate logarithmic relationship between the volume of a sensor and the typical signal to noise ratio which is achievable. There is also a general positive correlation between sensor volume and cost. The optical accelerometers used in accordance with the present invention however exhibit a plot 86 with a much steeper gradient indicating that much higher signal to noise ratios can be achieved for modest increases in size and that the 'break-even' point is around 1-1mm. This makes it highly plausible to provide a number of them in an array, in accordance with at least preferred embodiments of the invention, which is then still not too large to be incorporated in practical products. These relationships 84, 86 have been established through measurement of existing sensors and experimentation with optical accelerometers of the kind described herein and thus demonstrate the potential for significant technical and economic advantages as compared to currently available products.

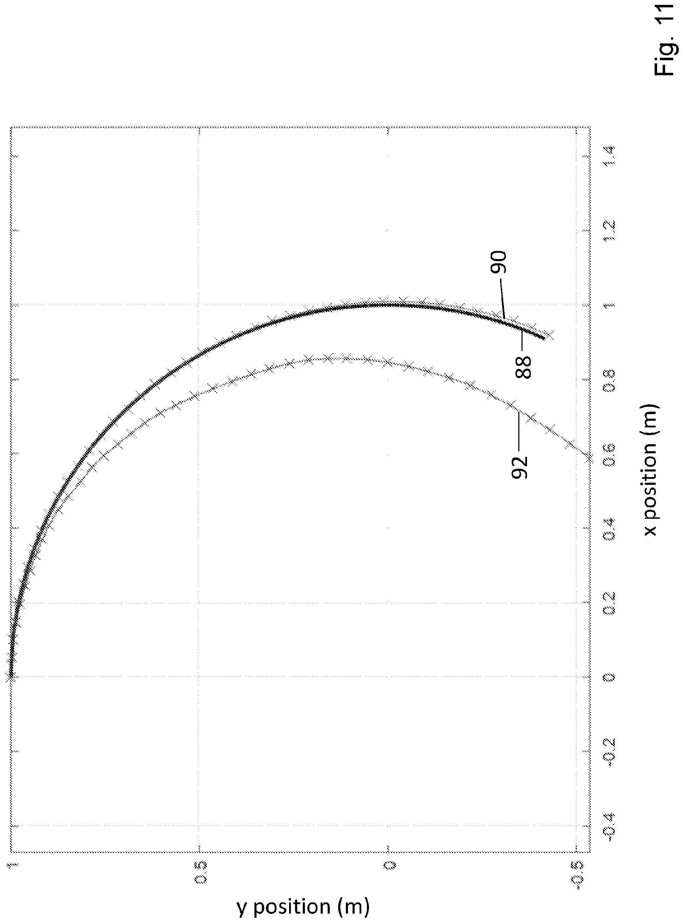

Fig. 11 shows a comparison of the expected error (due to sensor measurement noise) in estimated position for a path travelled over two seconds between i) an array of four optical accelerometers with a MEMS gyroscope and ii) a single conventional MEMS accelerometer with a MEMS gyroscope. This is illustrated by showing a true path 88 on a plot with an estimated path 90 for an optical array with a gyroscope and an estimated path 92 for a conventional MEMS accelerometer and gyroscope.

The signal-to-noise ratio (SNR) for the conventional MEMS accelerometer and gyroscope is:

$$SNR\ a_{MEMS} = 10 \log_{10}\left(\frac{\sigma^2_{signal}}{\sigma^2_{noise}}\right) = 47 \text{ dB}$$

The effective SNR for the optical array and gyroscope is:

$$SNR\ a_{OpMax} = 75 \text{ dB}$$

These figures correspond to a low-cost inertial measurement solution in consumer electronics, and such that the physical size of the two measurement solutions are similar, e.g. less than 4mm$^2$. The gyroscopes are identical in the two sensors.

A nonlinear least squares problem is solved to extract the most probable acceleration/gyroscope signal from the optical array:

$$a_{mes_i} = a_{true} + S(\omega)^2 r_i + S(\dot{\omega})r_i + noise$$

$$\omega_{mes} = \omega + noise$$

Here $a_{mes_i}$ is the measured acceleration of the i$^{th}$ accelerometer, $\omega_{mes}$ is the gyroscope measurement and $r_i$ is the constant displacement between accelerometer i and the origin of the accelerometer array.

The measurement equations are linear in the unknowns: [$\omega, \dot{\omega}, a_{true}$], and the most probable signal estimate is found using the weighted Gauss-Newton method. As can be seen from Fig. 11, the expected deviation of the position estimate from the actual position for the optical array is 1cm after 2 seconds, compared with 30cm for the conventional MEMS accelerometer.

It will be appreciate by those skilled in the art that there are many possible variations and applications of the principles described herein of which the examples above are merely a few.

**Claims**

1. A mobile object (40) comprising;
   an optical accelerometer arrangement (20) comprising:

an array of optical accelerometers (26) attached to a common structure (22), each of said optical accelerometers (26) providing a signal indicative of displacement of a measurement mass (6) as a result of an acceleration along a given axis applied to the common structure (22); and

a processor (31a) configured to determine an estimate of said acceleration using said signals;

**characterised in that** the mobile object (40) comprises a camera (64) configured to determine a position of the mobile object (40);

wherein the mobile object (40) is arranged to use the camera (64) to establish a series of absolute positions and the optical accelerometer output(s) to establish positions of said mobile object (40) relative to said absolute positions.

2. The mobile object (40) as claimed in claim 1 wherein the accelerometers (26) comprise a light source (10) arranged to provide a light beam which is reflected by a reflective surface moved by the measurement mass (6) to detect the displacement thereof.

3. The mobile object (40) as claimed in claim 1 or 2 wherein each of the accelerometers (26) comprises a diffraction grating (18) through which part of said light beam passes before being reflected from the reflective surface.

4. The mobile object (40) as claimed in claim 1, 2 or 3 wherein the optical accelerometers (26) are fabricated using Micro-Electrical Mechanical System techniques.

5. The mobile object (40) as claimed in any preceding claim wherein the array has a maximum linear dimension of between 5 and 100 mm.

6. The mobile object (40) as claimed in any preceding claim wherein the optical accelerometers (26) have a minimum spacing of between 1 and 10 mm.

7. The mobile object (40) as claimed in any preceding claim wherein the array comprises between 2 and 20 optical accelerometers (26).

8. The mobile object (40) as claimed in any preceding claim wherein the array conforms to a shape selected from the set consisting of a line, plane, sphere, tetrahedron, cube, cuboid, octahedron, dodecahedron and icosahedron.

9. The mobile object (40) as claimed in any preceding claim wherein the array comprises a plurality of optical accelerometers (26) having sensitivity in each of three orthogonal axes.

10. The mobile object (40) as claimed in any preceding claim, wherein the camera (64) is a stereoscopic or 3D camera.

11. The mobile object (40) as claimed in any preceding claim, also comprising a gyroscope (44).

**Patentansprüche**

1. Mobiles Objekt (40), umfassend:

eine Anordnung optischer Beschleunigungsmesser (20), die Folgendes umfasst:

ein Array von optischen Beschleunigungsmessern (26), die an einer gemeinsamen Struktur (22) angebracht sind, wobei jeder der optischen Beschleunigungsmesser (26) ein Signal bereitstellt, das eine Verschiebung einer Messmasse (6) infolge einer auf die gemeinsame Struktur (22) ausgeübten Beschleunigung entlang einer gegebenen Achse anzeigt; und

einen Prozessor (31a), der dazu konfiguriert ist, unter Verwendung der Signale eine Schätzung der Beschleunigung zu bestimmen;

**dadurch gekennzeichnet, dass** das mobile Objekt (40) eine Kamera (64) umfasst, die dazu konfiguriert ist, eine Position des mobilen Objekts (40) zu bestimmen;

wobei das mobile Objekt (40) so angeordnet ist, dass es mithilfe der Kamera (64) eine Reihe von absoluten Positionen ermittelt und mithilfe der optischen Beschleunigungsmesserausgabe(n) Positionen des mobilen Objekts (40) relativ zu den absoluten Positionen ermittelt.

**2.** Mobiles Objekt (40) nach Anspruch 1, wobei die Beschleunigungsmesser (26) eine Lichtquelle (10) umfassen, die dazu angeordnet ist, einen Lichtstrahl bereitzustellen, der von einer reflektierenden Oberfläche reflektiert wird, die von der Messmasse (6) bewegt wird, um deren Verschiebung zu erfassen.

**3.** Mobiles Objekt (40) nach Anspruch 1 oder 2, wobei jeder der Beschleunigungsmesser (26) ein Beugungsgitter (18) umfasst, durch das ein Teil des Lichtstrahls hindurchgeht, bevor er von der reflektierenden Oberfläche reflektiert wird.

**4.** Mobiles Objekt (40) nach Anspruch 1, 2 oder 3, wobei die optischen Beschleunigungsmesser (26) unter Verwendung von mikro-elektromechanischen Systemtechniken hergestellt sind.

**5.** Mobiles Objekt (40) nach einem vorstehenden Anspruch, wobei das Array eine maximale lineare Abmessung zwischen 5 und 100 mm aufweist.

**6.** Mobiles Objekt (40) nach einem vorstehenden Anspruch, wobei die optischen Beschleunigungsmesser (26) einen Mindestabstand zwischen 1 und 10 mm aufweisen.

**7.** Mobiles Objekt (40) nach einem vorstehenden Anspruch, wobei das Array zwischen 2 und 20 optische Beschleunigungsmesser (26) umfasst.

**8.** Mobiles Objekt (40) nach einem vorstehenden Anspruch, wobei das Array einer Form entspricht, die aus der Gruppe ausgewählt ist, die aus einer Linie, Ebene, Kugel, einem Tetraeder, Würfel, Quader, Oktaeder, Dodekaeder und Ikosaeder besteht.

**9.** Mobiles Objekt (40) nach einem vorstehenden Anspruch, wobei das Array eine Vielzahl von optischen Beschleunigungsmessern (26) umfasst, die eine Empfindlichkeit in jeder von drei orthogonalen Achsen aufweisen.

**10.** Mobiles Objekt (40) nach einem vorstehenden Anspruch, wobei die Kamera (64) eine stereoskopische oder 3D-Kamera ist.

**11.** Mobiles Objekt (40) nach einem vorstehenden Anspruch, das weiter ein Gyroskop (44) umfasst.

**Revendications**

**1.** Objet mobile (40) comprenant :

un agencement d'accéléromètres optiques (20) comprenant :

un ensemble d'accéléromètres optiques (26) fixés à une structure commune (22), chacun desdits accéléromètres optiques (26) fournissant un signal indiquant le déplacement d'une masse de mesure (6) suite à une accélération le long d'un axe donné appliquée à la structure commune (22) ; et
un processeur (31a) configuré pour déterminer une estimation de ladite accélération à l'aide desdits signaux ;

**caractérisé en ce que** l'objet mobile (40) comprend une caméra (64) configurée pour déterminer une position de l'objet mobile (40) ;
dans lequel l'objet mobile (40) est agencé pour utiliser la caméra (64) pour établir une série de positions absolues et la ou les sorties d'accéléromètres optiques pour établir les positions dudit objet mobile (40) par rapport auxdites positions absolues.

**2.** Objet mobile (40) selon la revendication 1, dans lequel les accéléromètres (26) comprennent une source de lumière (10) agencée pour fournir un faisceau lumineux qui est réfléchi par une surface réfléchissante déplacée par la masse de mesure (6) pour détecter le déplacement de celle-ci.

**3.** Objet mobile (40) selon la revendication 1 ou 2, dans lequel chacun des accéléromètres (26) comprend un réseau de diffraction (18) à travers lequel passe une partie dudit faisceau lumineux avant d'être réfléchi par la surface réfléchissante.

**4.** Objet mobile (40) selon la revendication 1, 2 ou 3, dans lequel les accéléromètres optiques (26) sont fabriqués à l'aide de techniques de systèmes micro-électromécaniques.

**5.** Objet mobile (40) selon une quelconque revendication précédente, dans lequel l'ensemble présente une dimension linéaire maximale comprise entre 5 et 100 mm.

**6.** Objet mobile (40) selon une quelconque revendication précédente, dans lequel les accéléromètres optiques (26) présentent un espacement minimal compris entre 1 et 10 mm.

**7.** Objet mobile (40) selon une quelconque revendication précédente, dans lequel l'ensemble comprend entre 2 et 20 accéléromètres optiques (26).

**8.** Objet mobile (40) selon une quelconque revendication précédente, dans lequel l'ensemble suit une forme sélectionnée dans le groupe consistant en une ligne, un plan, une sphère, un tétraèdre, un cube, un cuboïde, un octaèdre, un dodécaèdre et un icosaèdre.

**9.** Objet mobile (40) selon une quelconque revendication précédente, dans lequel l'ensemble comprend une pluralité d'accéléromètres optiques (26) présentant une sensibilité dans chacun des trois axes orthogonaux.

**10.** Objet mobile (40) selon une quelconque revendication précédente, dans lequel la caméra (64) est une caméra stéréoscopique ou 3D.

**11.** Objet mobile (40) selon une quelconque revendication précédente, comprenant également un gyroscope (44).

Fig. 1

Fig. 2

Fig. 3a

Fig. 3b

Fig. 4

40

20

44

42

**Fig. 5a**

20

48

20

46

**Fig. 5b**

20

50

**Fig. 5c**

52

20

**Fig. 5d**

Fig. 6a

Fig. 6b

EP 3 465 229 B1

Fig. 7

58    56    54    56

58

60    62

Fig. 8a

64    66

20

68

60

62

Fig. 8b

Capture reference 3D image — 70

Define reference position of headset — 72

Track movement of headset from ref position using optical accelerometer

Has threshold time elapsed? — 76

No

Yes

Capture 3D image — 78

Compare to reference 3D image — 80

Calculate position change relative to reference position — 82

Fig. 9

Fig. 10

Fig. 11

**EP 3 465 229 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010145620 A1
- DE 102014102727 B3

- US 2002180978 A1

**Non-patent literature cited in the description**

- **HESCH, JOEL A. et al.** Camera-IMU-based localization: Observability analysis and consistency improvement. *The International Journal of Robotics Research*, 2013